# EUROPEAN PATENT APPLICATION

(11) **EP 3 550 498 A1**
(43) Date of publication of application: **09.10.2019**
(21) Application number: 17848666.8
(22) Date of filing: 01.09.2017
(51) Int. Cl.: G06Q 50/02

(54) **INFORMATION PROCESSING DEVICE AND INFORMATION PROCESSING SYSTEM**

(30) Priority: 07.09.2016 JP 2016174501; 27.03.2017 JP 2017060619
(71) Applicant: Bosch Corporation, Tokyo 150-8360 (JP)
(72) Inventor: ITO Satoshi, Tokyo 150-8360 (JP); MORI Asako, Tokyo 150-8360 (JP); NATARAJU Vusirikala, Bengaluru 560095 Karnataka (IN); PRATHAP Kommi, Bengaluru 560095 Karnataka (IN)
(74) Representative: Bee, Joachim
(86) International application number: PCT/JP2017/031517
(87) International publication number: WO 2018/047726

(57) **Abstract**

A structure that can curb costs and improve accuracy in determining whether a disease and insect damage occurs is provided. An information processing device includes: a machine learning unit configured to perform machine learning of a disease and insect damage occurrence determination model using cultivation information as an input on the basis of disease and insect damage occurrence information and the cultivation information of crops corresponding to the disease and insect damage occurrence information; and an output unit configured to output information on the disease and insect damage occurrence determination model acquired by the machine learning. An information processing system includes: an information acquiring unit configured to acquire disease and insect damage occurrence information and cultivation information of crops; a machine learning unit configured to perform machine learning of a disease and insect damage occurrence determination model using cultivation information as an input on the basis of the disease and insect damage occurrence information and the cultivation information corresponding to the disease and insect damage occurrence information; and an output unit configured to output information on the disease and insect damage occurrence determination model acquired by the machine learning.

## Description

### Technical Field

The present invention relates to an information processing device and an information processing system.

### Background Art

Recently, technology for protecting crops from disease and insect damages using information communication technology has been researched and developed. Specifically, a technique of observing statuses in cultivation areas of crops using sensors and presenting information on occurrence of disease and insect damages to a user using the observation results acquired from the sensors is known. In general, disease and insect damages decrease an amount of crops harvested and the qualities thereof but can be suppressed by spraying chemicals. Accordingly, a user can effectively reduce damages of crops due to disease and insect damages by spraying chemicals on the basis of presented information.

For example, Patent Document 1 discloses the invention related to a device that observes an air temperature and a room temperature in a greenhouse using a plurality of sensors and displays a position with an occurrence risk of a disease and insect damage by determining whether the observed air temperature and the observed room temperature satisfy occurrence conditions which are stored in advance in a database (DB) .

Patent Document 2 discloses the invention related to a system that observes an air temperature of a green onion cultivation farm, a wet state of leaf surfaces of green onion, an amount of rainfall, and a wind speed using sensors and displays infection prediction results acquired by inputting the observation results to an infection prediction model.

Patent Document 3 discloses the invention related to a device that derives a disease and insect damage which is predicted to occur or a disease and insect damage which has occurred using work results and observation records associated with grass, weather data, and a prediction rule or a diagnosis rule and displays the derivation results.

### Citation List

### Patent Document

Patent Document 1: JP-A-2015-119646
Patent Document 2: JP-A-2008-125496
Patent Document 3: JP-A-6-30657

### Summary of the Invention

### Technical Problem

However, in the conventional art, there is a problem in that it is difficult to improve accuracy in determining whether a disease and insect damage occurs. For example, in the inventions disclosed in the above-mentioned patent documents, information for determining whether a disease and insect damage occurs such as occurrence conditions, an infection prediction model, and a prediction rule or a diagnosis rule (hereinafter also referred to as a "disease and insect damage occurrence determination model") is fixed. In addition, even when a disease and insect damage occurrence determination model is variable, for changing the disease and insect damage occurrence determination model, definition and verification of the disease and insect damage occurrence determination model based on a large amount of data are generally performed by a person and thus costs such as times and expenditures are required. Accordingly, it is difficult to improve a disease and insect damage occurrence determination model and it is also difficult to enhance accuracy in determining whether a disease and insect damage occurs. It is also difficult to cope with change in occurrence conditions or the like due to a variation of a disease and insect damage.

Therefore, the invention was made in consideration of the above-mentioned problems and an objective of the invention is to provide a structure that can curb costs and improve accuracy in determining whether a disease and insect damage occurs.

### Solution to Problem

In order to achieve the above-mentioned objective, according to an aspect of the invention, there is provided an information processing device including: a machine learning unit configured to perform machine learning of a disease and insect damage occurrence determination model using cultivation information as an input on the basis of disease and insect damage occurrence information and the cultivation information of crops corresponding to the disease and insect damage occurrence information; and an output unit configured to output information on the disease and insect damage occurrence determination model acquired by the machine learning.

The machine learning unit may perform machine learning of the disease and insect damage occurrence determination model for specific cultivation information.

The specific cultivation information may include information indicating a type of a disease and insect damage or a cultivation area.

The disease and insect damage occurrence information may include information indicating an occurrence time point of a disease and insect damage, and the machine learning unit may perform machine learning of the disease and insect damage occurrence determination model on the basis of the cultivation information at a time point which is identified from the occurrence time point of the disease and insect damage.

The time point which is identified from the occurrence time point of the disease and insect damage may include a time point which has gone back a predetermined time from the occurrence point of the disease and insect damage.

The disease and insect damage may include an infectious disease, and the time point which has gone back a predetermined time from the occurrence time point of the disease and insect damage may include a time point which has gone back a latent period of the infectious disease from an occurrence time point of the infectious disease.

Information on the disease and insect damage occurrence determination model may include first information which is generated using the disease and insect damage occurrence determination model.

The cultivation information which is input to the disease and insect damage occurrence determination model may include the cultivation information which is predicted.

The first information may include chemical spray information which is generated on the basis of an output result of the disease and insect damage occurrence determination model.

The chemical spray information may include information indicating a chemical of which spraying is recommended, a spray time of the recommended chemical, or a degree of recommendation of spraying thereof.

The output unit may additionally output display information for the first information.

The display information may include the first information in a time series.

The display information may include the first information for each type of disease and insect damage.

The display information may further include the cultivation information corresponding to the first information which is displayed.

The cultivation information may include at least one of information on a cultivation area of crops, information on crops which are cultivated, disease and insect damage information, and chemical information on a disease and insect damage.

The cultivation information may include at least one of cultivation area observation information and weather information.

The information which is input to the disease and insect damage occurrence determination model may further include a representative value of time-series data of an environmental indicator which is calculated from at least one of the cultivation area observation information and the weather information.

The information which is input to the disease and insect damage occurrence determination model may further include a representative value of time-series data of the cultivation area observation information or the weather information.

The representative value may include a predetermined percentile value of the time-series data.

In order to achieve the above-mentioned objective, according to another aspect of the invention, there is provided an information processing system including: an information acquiring unit configured to acquire disease and insect damage occurrence information and cultivation information of crops; a machine learning unit configured to perform machine learning of a disease and insect damage occurrence determination model using cultivation information as an input on the basis of the disease and insect damage occurrence information and the cultivation information corresponding to the disease and insect damage occurrence information; and an output unit configured to output information on the disease and insect damage occurrence determination model acquired by the machine learning.

### Advantageous Effects of the Invention

As described above, according to the invention, it is possible to provide a structure that can curb costs and improve accuracy in determining whether a disease and insect damage occurs.

### Brief Description of the Drawings

Fig. 1 is a diagram for describing the outline of an information processing system according to an embodiment of the invention.
Fig. 2 is a block diagram schematically illustrating a functional configuration of the information processing system according to the embodiment of the invention.
Fig. 3 is a diagram illustrating an example of a disease and insect damage determination result screen which is displayed on an information processing terminal according to the embodiment of the invention.
Fig. 4 is a diagram illustrating an example of a chemical information registration screen which is displayed on the information processing terminal according to the embodiment of the invention.
Fig. 5 is a diagram illustrating an example of a chemical information registration screen which is displayed on the information processing terminal according to the embodiment of the invention.
Fig. 6 is a diagram conceptually illustrating an example of a whole process flow in the information processing system according to the embodiment of the invention.
Fig. 7 is a flowchart conceptually illustrating an example of a machine learning process in an information processing server according to the embodiment of the invention.
Fig. 8 is a flowchart conceptually illustrating an example of a disease and insect damage occurrence determining process in the information processing server according to the embodiment of the invention.
Fig. 9 is a flowchart conceptually illustrating an example of a disease and insect damage occurrence determining process in the information processing server according to a modified example of the embodiment of the invention.
Fig. 10 is a diagram illustrating an example of a chemical effectiveness presentation screen which is displayed on an information processing terminal according to a modified example of the embodiment of the invention.
Fig. 11 is a block diagram schematically illustrating an example of a functional configuration of an information processing system according to another embodiment of the invention.
Fig. 12 is a flowchart conceptually illustrating an example of a machine learning process in an information processing server according to another embodiment of the invention.
Fig. 13 is a flowchart conceptually illustrating an example of a disease and insect damage occurrence determining process in an information processing server according to another embodiment of the invention.
Fig. 14 is an explanatory diagram illustrating a hardware configuration of the information processing server according to the embodiment of the invention.

### Mode for Carrying Out the Invention

Hereinafter, suitable embodiments of the invention will be described in detail with reference to the accompanying drawings. Incidentally, in this specification and the drawings, elements having substantially the same functional configurations will be referred to by the same reference signs and description thereof will not be repeated.

### <1. Introduction>

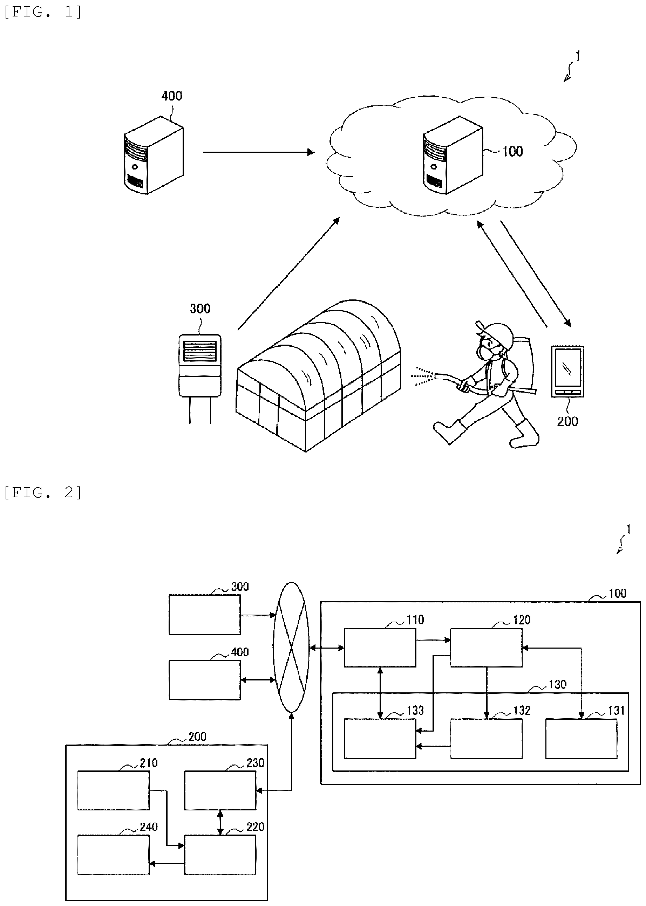

First, an information processing system 1 according to an embodiment of the invention will be described below with reference to Fig. 1. Fig. 1 is a diagram for describing the outline of the information processing system 1 according to an embodiment of the invention.

The information processing system 1 has a function of collecting cultivation information of crops, a function of determining whether a disease and insect damage occurs on the basis of the cultivation information, and a function of presenting a determination result. Specifically, the information processing system 1 includes an information processing server 100 that has an information collecting function and an information transmitting function, an information processing terminal 200 that has an information registering function and an information browsing function, and a sensor node 300 that has an observation function and an observation information transmitting function.

For example, the information processing server 100 collects crop information, cultivation area information, disease and insect damage information, and chemical information from the information processing terminal 200 which is managed by a cultivator of crops, collects cultivation area observation information from the sensor node 300 which is installed in a cultivation area, and further collects weather information from a weather information server 400 as illustrated in Fig. 1. Then, the information processing server 100 inputs the collected information to a disease and insect damage occurrence determination model and transmits output information from the disease and insect damage occurrence determination model to the information processing terminal 200. A user browses the transmitted output information which is presented by the information processing terminal 200 and sprays chemicals in the cultivation area.

Here, conventionally, updating of a disease and insect damage occurrence determination model has not been sufficiently studied as described above. Accordingly, it is difficult to improve a disease and insect damage occurrence determination model and it is difficult to enhance accuracy in determining whether a disease and insect damage occurs.

Therefore, the invention proposes an information processing system 1 that performs machine learning of a disease and insect damage occurrence determination model using cultivation information as an input on the basis of disease and insect damage occurrence information and the cultivation information of plants corresponding to the disease and insect damage occurrence information.

For example, the information processing server 100 further includes a machine learning function. The information processing server 100 performs machine learning of a disease and insect damage occurrence determination model using the collected information and inputs cultivation information to the disease and insect damage occurrence determination model after being subjected to machine learning. Then, the information processing server 100 transmits output information from the disease and insect damage occurrence determination model after being subjected to machine learning to the information processing terminal 200.

In this way, by performing machine learning of a disease and insect damage occurrence determination model, it is possible to autonomously update the disease and insect damage occurrence determination model. Accordingly, it is possible to curb costs and to improve accuracy in determining whether a disease and insect damage occurs.

Incidentally, the functions of the information processing server 100 may be embodied by a plurality of devices. For example, the functions of the information processing server 100 may be embodied by cloud computing including a plurality of devices. In Fig. 1, an example in which the information processing terminal 200 is a mobile communication terminal such as a smartphone has been described, but the information processing terminal 200 may be an information communication device such as a stationary personal computer.

### <2. Embodiment of Invention>

The outline of the information processing system 1 according to an embodiment of the invention has been described hitherto. Details of the information processing system 1 according to the embodiment of the invention will be described below.

### <2.1. Configuration of System>

First, the functional configuration of the information processing system 1 will be described with reference to Fig. 2. Fig. 2 is a block diagram schematically illustrating an example of a functional configuration of the information processing system 1 according to the embodiment of the invention.

As illustrated in Fig. 2, the information processing system 1 includes the information processing server 100, the information processing terminal 200, and the sensor node 300. The information processing server 100, the information processing terminal 200, the sensor node 300, and the weather information server 400 which will be described later are connected to each other via a communication network. These devices are connected to each other via a wide area network (WAN) such as the Internet.

### [Information Processing Server]

The information processing server 100 operates as an information processing device and includes a communication unit 110, a storage unit 120, and a control unit 130.

### (Communication Unit)

The communication unit 110 communicates with the information processing terminal 200, the sensor node 300, and the weather information server 400. Specifically, the communication unit 110 receives crop information, cultivation area information, disease and insect damage information, chemical information, disease and insect damage occurrence information, and provision request information from the information processing terminal 200, receives cultivation area observation information from the sensor node 300, and receives weather information from the weather information server 400. The communication unit 110 serves as a part of an output unit and transmits display information to the information processing terminal 200.

### (Storage Unit)

The storage unit 120 stores information on processing of the control unit 130. Specifically, the storage unit 120 stores cultivation information (crop information, cultivation area information, disease and insect damage information, chemical information, cultivation area observation information, and weather information) and disease and insect damage occurrence information received by the communication unit 110. The storage unit 120 stores a disease and insect damage occurrence determination model and machine learning parameters.

### (Control Unit)

The control unit 130 controls the operation of the information processing server 100 as a whole. Specifically, the control unit 130 includes a machine learning unit 131, a disease and insect damage occurrence determining unit 132, and a display information transmission and control unit 133, and controls processing associated with determination of whether a disease and insect damage occurs.

The machine learning unit 131 performs machine learning of a disease and insect damage occurrence determination model. Specifically, the machine learning unit 131 performs machine learning of a disease and insect damage occurrence determination model on the basis of the disease and insect damage occurrence information and the cultivation information corresponding to the disease and insect damage occurrence information which are stored in the storage unit 120. The machine learning of a disease and insect damage occurrence determination model is performed for specific cultivation information. An example of the specific cultivation information is a type of a disease and insect damage. More specifically, the disease and insect damage occurrence information is information indicating an occurrence time point of a disease and insect damage and the machine learning unit 131 performs machine learning of the disease and insect damage occurrence determination model on the basis of the cultivation information at a time point which is identified from the occurrence time point of the disease and insect damage.

Specifically, the machine learning unit 131 acquires cultivation information at a time point which has gone back a predetermined time from the occurrence time point of the disease and insect damage indicated by the disease and insect damage occurrence information from the storage unit 120. Then, the machine learning unit 131 performs machine learning of the disease and insect damage occurrence determination model using the acquired cultivation information. For example, when the disease and insect damage is an infectious disease, the machine learning unit 131 acquires cultivation information at a time point which has gone back a latent period of the infectious disease from an occurrence time point of the infectious disease indicated by the disease and insect damage occurrence information from the storage unit 120. Then, the machine learning unit 131 performs machine learning of the disease and insect damage occurrence determination model for the infectious disease using the acquired past cultivation information. The disease and insect damage occurrence determination model after being subjected to machine learning is stored in the storage unit 120. By performing machine learning using the cultivation information of an estimated infection date instead of an occurrence date of the infectious disease in this way, it is possible to present a degree of likelihood of infection (hereinafter also referred to as an infection risk) to a user. Accordingly, it is possible to prevent infection of an infectious disease.

Incidentally, the machine learning of the disease and insect damage occurrence determination model may be performed for a cultivation area. Specifically, the disease and insect damage occurrence information includes information indicating a cultivation area in which a disease and insect damage has occurred and the machine learning unit 131 performs machine learning of the disease and insect damage occurrence determination model on the basis of the cultivation information corresponding to the cultivation area in which the disease and insect damage has occurred. For example, the machine learning unit 131 acquires cultivation information on a cultivation area indicated by the disease and insect damage occurrence information at a time point which has gone back a latent period of the infectious disease from the occurrence time point of the infectious disease from the storage unit 120. Then, the machine learning unit 131 performs machine learning of the disease and insect damage occurrence determination model for the infectious disease in the cultivation area using the acquired past cultivation information.

The cultivation information which is used for machine learning may be cultivation information at an occurrence time point of a disease and insect damage. In this case, it is possible to present a degree of likelihood of occurrence of a disease and insect damage (hereinafter also referred to as an occurrence risk) to a user. This is particularly effective when the occurring disease and insect damage can be cured.

The disease and insect damage occurrence determining unit 132 determines whether a disease and insect damage occurs. Specifically, the disease and insect damage occurrence determining unit 132 determines whether a disease and insect damage occurs and an occurrence risk of the disease and insect damage using the disease and insect damage occurrence determination model. For example, the disease and insect damage occurrence determining unit 132 acquires a disease and insect damage occurrence determination model and cultivation information at a specific time point from the storage unit 120 and inputs the acquired cultivation information to the disease and insect damage occurrence determination model. Then, the disease and insect damage occurrence determining unit 132 supplies information indicating whether a disease and insect damage occurs or an occurrence risk of the disease and insect damage which is output from the disease and insect damage occurrence determination model (hereinafter also referred to as a disease and insect damage occurrence determination result) to the display information transmission and control unit 133. The cultivation information at the specific time point may be future cultivation information which is predicted. For example, weather information in the cultivation information may be weather forecast. In this case, the disease and insect damage occurrence determination result which is output is also predicted information.

The display information transmission and control unit 133 generates information which is displayed on the information processing terminal 200. Specifically, the display information transmission and control unit 133 serves as a part of an output unit and generates display information for information which is generated using the disease and insect damage occurrence determination model. The display information is a time-series disease and insect damage occurrence determination result or a disease and insect damage occurrence determination result for each type of disease and insect damage. For example, when provision request information is received by the communication unit 110, the display information transmission and control unit 133 acquires the disease and insect damage occurrence determination results in a period which is identified from the provision request information as the disease and insect damage occurrence determination result for a disease and insect damage of the type identified from the provision request information. Then, the display information transmission and control unit 133 generates display information by processing the acquired disease and insect damage occurrence determination results and supplies the generated display information to the communication unit 110. Incidentally, the disease and insect damage occurrence determination result may be information on a cultivation area (a farm) which is identified from the provision request information. The disease and insect damage occurrence determination result may be supplied without being processed.

Cultivation information corresponding to the displayed disease and insect damage occurrence determination result may be added as the display information. For example, the display information transmission and control unit 133 acquires cultivation information (weather information, chemical information, and the like) which is an input of a disease and insect damage occurrence determining process from which the acquired disease and insect damage occurrence determination result has been output from the storage unit 120. Then, the display information transmission and control unit 133 generates display information by processing the acquired cultivation information and supplies the generated display information to the communication unit 110. The cultivation information may be supplied without being processed.

### [Information Processing Terminal]

The information processing terminal 200 operates as a part of an information acquiring unit and includes an operation input unit 210, a control unit 220, a communication unit 230, and a display unit 240 as illustrated in Fig. 2.

The operation input unit 210 receives an operation of the information processing terminal 200. Specifically, the operation input unit 210 receives an input operation and generates a variety of information in response to the received operation. The variety of generated information is supplied to the control unit 220. Specifically, the information which is generated in response to the operation includes crop information, cultivation area information, disease and insect damage information, chemical information, disease and insect damage occurrence information, and provision request information.

The crop information is information indicating types of crops, species, a sowing date, a planting date, a degree of defoliation of leafs, or tree vigor or growth stages. The cultivation area information is information indicating an elevation of a cultivation area, weather characteristics, soil types, soil nutritional statuses, or a degree of weeding. Incidentally, the cultivation area information may be information on a single cultivation area or may be information on a plurality of cultivation areas. The disease and insect damage information is information indicating types of disease and insect damages such as gray mold, leaf mold, powdery mildew, or plague. Incidentally, examples of a disease and insect damage include a microbial disease, pest, physiological disorder, or physiological disorder due to weeds. The chemical information is information indicating types of chemicals, effectiveness of chemicals, sprayed chemicals, a spraying date, or an amount of sprayed chemicals. The disease and insect damage occurrence information is information indicating a disease and insect damage having occurred, an occurrence date, or a degree of occurrence. The provision request information is information indicating a request for requesting the information processing server 100 to provide display information. For example, by displaying an input screen by the display unit 240 and allowing a user to operate the input screen, the variety of above-mentioned information is generated.

The control unit 220 controls the operation of the information processing terminal 200 as a whole. Specifically, the control unit 220 controls the operations of the communication unit 230 and the display unit 240. For example, the control unit 220 causes the communication unit 230 to transmit the information generated by the operation input unit 210. The control unit 220 generates image information on the basis of display information which is provided from the information processing server 100 and causes the display unit 240 to display an image by supplying image information to the display unit 240.

The communication unit 230 communicates with the information processing server 100. Specifically, the communication unit 230 transmits the crop information, the cultivation area information, the disease and insect damage information, the chemical information, the disease and insect damage occurrence information, and the provision request information which are generated by the operation input unit 210 to the information processing server 100. The communication unit 230 receives display information from the information processing server 100. Incidentally, the information processing terminal 200 may communicate with the sensor node 300 or the weather information server 400 and receive cultivation area observation information or weather information.

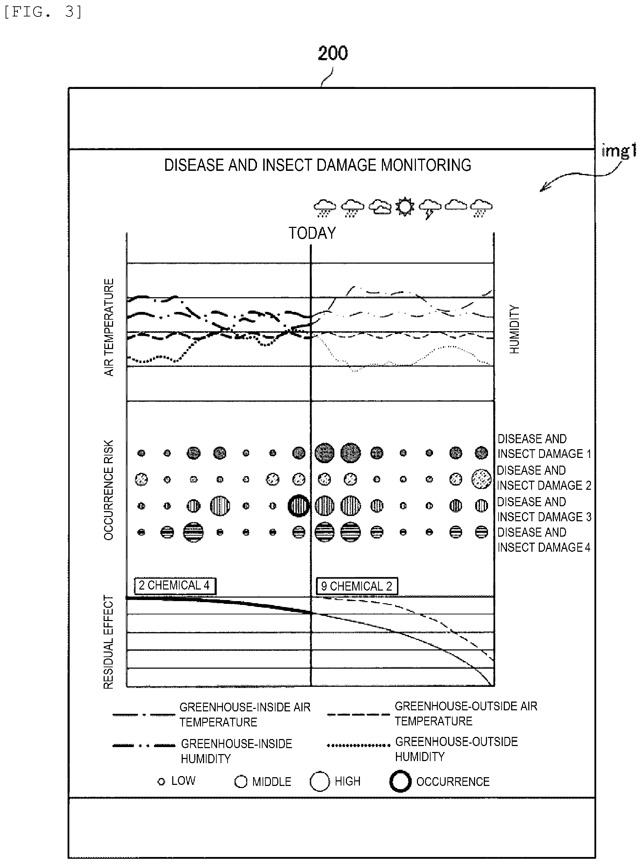

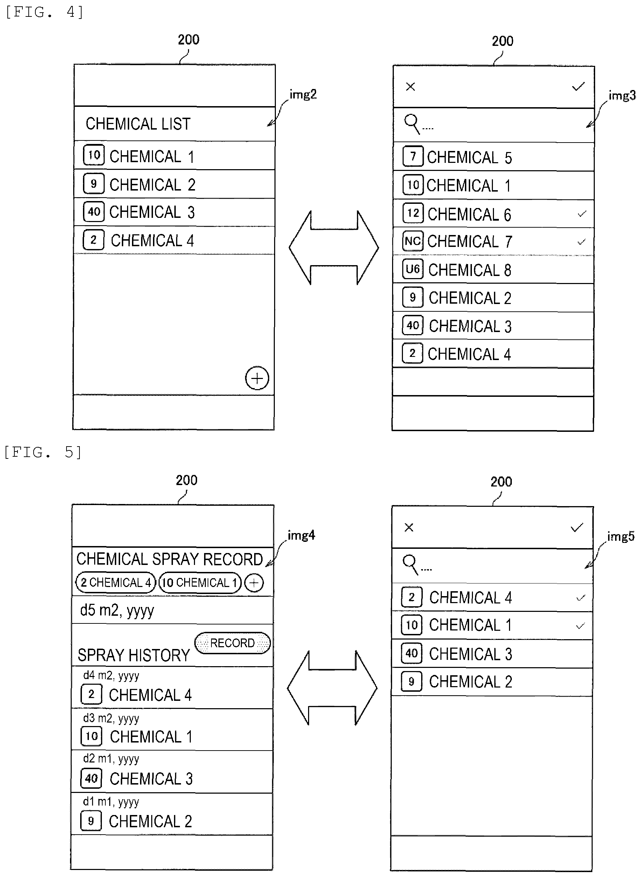

The display unit 240 serves as a part of an output unit and displays an image on the basis of an instruction from the control unit 220. Specifically, the display unit 240 displays an information display screen and an operation input screen on the basis of image information which is supplied from the control unit 220. For example, the display unit 240 displays at least a disease and insect damage occurrence determination result screen, a crop information registration screen, a cultivation area information registration screen, a disease and insect damage information registration screen, a chemical information registration screen, and a disease and insect damage occurrence information registration screen. The disease and insect damage occurrence determination result screen and the chemical information registration screen out of the screens will be described in details with reference to Figs. 3 to 5. Fig. 3 is a diagram illustrating an example of a disease and insect damage occurrence determination result screen which is displayed on the information processing terminal 200 according to the embodiment of the invention. Figs. 4 and 5 are diagrams illustrating examples of the chemical information registration screen which is displayed on the information processing terminal 200 according to the embodiment of the invention.

### (Disease and Insect Damage Occurrence Determination Result Screen)

The display unit 240 displays a disease and insect damage occurrence determination result screen for each cultivation area on the basis of the image information which is generated on the basis of the disease and insect damage occurrence determination result by the control unit 220. For example, in a disease and insect damage occurrence determination result screen img1, a circle for expressing an occurrence risk corresponding to the disease and insect damage occurrence determination result by its size is displayed in a time series for each type of disease and insect damage (disease and insect damages to 1 to 4) as illustrated in Fig. 3. In the disease and insect damage occurrence determination result screen img1, a message indicating that a disease and insect damage has occurred may be displayed. For example, a visible outline is added to the circle as illustrated in Fig. 3 in an occurrence risk on a day on which a disease and insect damage has occurred.

The disease and insect damage occurrence determination result screen includes weather information and chemical information corresponding to the disease and insect damage occurrence determination result. For example, as illustrated in Fig. 3, a greenhouse-inside air temperature, a greenhouse-outside air temperature, a greenhouse-inside humidity, and a greenhouse-outside humidity in a time series corresponding to the time series of the occurrence risks are displayed. As illustrated in Fig. 3, information indicating chemicals (chemical 4 and chemical 2) which have been sprayed and a graph indicating a time-series change in a degree of residual effect of a sprayed chemical are displayed with a spraying date as a start point.

### (Chemical Information Registration Screen)

The display unit 240 displays a used chemical registration screen as the chemical information registration screen on the basis of the image information generated by the control unit 220. Examples of the used chemical registration screen include a screen img2 in which a list of chemicals registered as used chemicals is displayed and a screen img3 in which a list of all registered chemicals is displayed. In the screen img2, codes corresponding to types of chemicals and chemical names are displayed in parallel. When an addition button on the lower-right side in the screen img2 is pressed, display is switched to the screen img3. When a user selects a chemical in the screen img3, the selected chemical is registered as a used chemical and the selected chemical is added to the list in the screen img2.

The display unit 240 displays a chemical spray record screen as the chemical information registration screen. Examples of the chemical spray record screen include a screen img4 for registering chemical spray information and a screen img5 for selecting a chemical which is sprayed as illustrated in Fig. 5. In the screen img4, sprayed chemicals, spraying dates, and spray histories are displayed. A sprayed chemical is added to the screen img4 by selecting a chemical from a list of used chemicals registered in the screen img5 which is displayed by pressing an addition button. In the example illustrated in Fig. 5, chemical 4 and chemical 1 are selected. When a record button is pressed in a state in which the used chemicals and the spraying date are input, chemical spray information is registered in the sprayed chemicals and the spraying date. The registered chemical spray information is added as a spray history in screen img4.

### [Sensor Node]

The sensor node 300 operates as a part of an information acquiring unit, is installed in a cultivation area of crops, and includes a sensor, a signal processing unit, and a communication unit. The sensor generates a signal by observing an environment around the sensor. Examples of the sensor include a temperature sensor, a humidity sensor, a solar radiation sensor, a carbon dioxide concentration sensor, and a soil moisture sensor.

The signal processing unit generates cultivation area observation information on the basis of signals generated by the sensors. Specifically, the signal processing unit generates cultivation area observation information by performing signal processing such as sampling or filtering on the signals acquired from the sensors. Incidentally, the generated cultivation area observation information may be digital data or analog data.

The communication unit communicates with the information processing server 100. Specifically, the communication unit transmits the cultivation area observation information generated by the signal processing unit to the information processing server 100. In addition, the communication unit may perform the transmission when the cultivation area observation information is generated or may perform the transmission at intervals of a predetermined time.

### [Weather Information Server]

The weather information server 400 supplies weather information to an external device. Specifically, when weather information is requested from the information processing server 100, the weather information server 400 transmits the required weather information to the information processing server 100. For example, weather information is information indicating an air temperature, a humidity, an amount of solar radiation, or an amount of rainfall.

### <2.2. Processing of System>

Processing of the information processing system 1 will be described below.

### (Whole Processing)

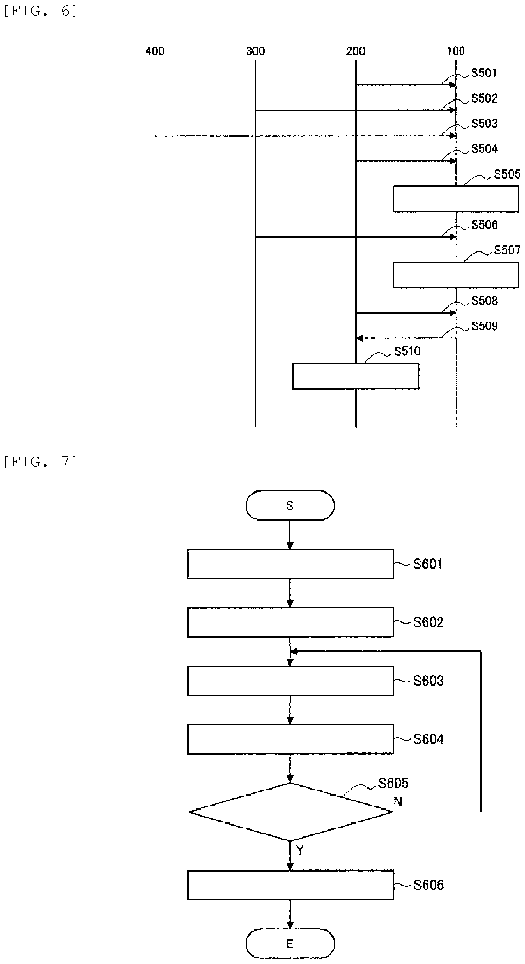

First, a whole process flow of the information processing system 1 will be described with reference to Fig. 6. Fig. 6 is a diagram conceptually illustrating an example of the whole process flow of the information processing system 1 according to the embodiment of the invention.

The information processing terminal 200 transmits crop information, cultivation area information, disease and insect damage information, and chemical information to the information processing server 100 (Step S501) . Specifically, the communication unit 230 transmits crop information, cultivation area information, disease and insect damage information, and chemical information which are generated in response to a user's operation by the operation input unit 210 to the information processing server 100.

The sensor node 300 transmits cultivation area observation information to the information processing server 100 (Step S502). Specifically, the sensor node 300 transmits cultivation area observation information which is generated on the basis of signals acquired from the sensors to the information processing server 100.

The weather information server 400 transmits weather information to the information processing server 100 (Step S503). Specifically, the weather information server 400 generates weather information or acquires weather information from another device. Then, the weather information server 400 transmits the weather information to the information processing server 100 in response to a request from the information processing server 100 or periodically.

The information processing terminal 200 transmits disease and insect damage occurrence information to the information processing server 100 (Step S504) . Specifically, the communication unit 230 transmits disease and insect damage occurrence information which is generated in response to a user's operation by the operation input unit 210 to the information processing server 100.

The information processing server 100 performs machine learning of a disease and insect damage occurrence determination model using the received information (Step S505) . Specifically, the communication unit 110 stores cultivation information which is received from the information processing terminal 200, the sensor node 300, and the weather information server 400 in the storage unit 120. Then, the machine learning unit 131 performs machine learning of a disease and insect damage occurrence determination model using the stored cultivation information. Incidentally, details thereof will be described later.

The weather information server 400 transmits weather forecast information to the information processing server 100 (Step S506) . Specifically, the weather information server 400 transmits future weather information to the information processing server 100 in response to a request from the information processing server 100 or periodically.

The information processing server 100 predicts occurrence of a disease and insect damage using the disease and insect damage occurrence determination model (Step S507) . Specifically, when the weather forecast information is received, the disease and insect damage occurrence determining unit 132 inputs cultivation information and weather forecast information other than the weather information which has been stored in advance to the disease and insect damage occurrence determination model. Then, the disease and insect damage occurrence determining unit 132 stores a disease and insect damage occurrence determination result output from the disease and insect damage occurrence determination model in the storage unit 120. Incidentally, details thereof will be described later.

The information processing terminal 200 transmits provision request information for occurrence prediction of a disease and insect damage to the information processing server 100 (Step S508). Specifically, the communication unit 230 transmits provision request information for display information associated with occurrence prediction of a disease and insect damage which is generated in response to a user's operation by the operation input unit 210 to the information processing server 100.

The information processing server 100 transmits display information to the information processing terminal 200 as a response to the received provision request information (Step S509). Specifically, when the provision request information is received by the communication unit 110, the display information transmission and control unit 133 generates display information from the disease and insect damage occurrence determination result stored in the storage unit 120. Then, the display information transmission and control unit 133 causes the communication unit 110 to transmit the generated display information to the information processing terminal 200.

The information processing terminal 200 displays disease and insect damage occurrence prediction information on the basis of the received display information (Step S510). Specifically, the control unit 220 generates image information from the display information received by the communication unit 230 and supplies the generated image information to the display unit 240. The display unit 240 displays a disease and insect damage occurrence determination result screen on the basis of the supplied image information.

### (Machine Learning Process)

A flow of a machine learning process in the information processing server 100 will be described below in detail with reference to Fig. 7. Fig. 7 is a flowchart conceptually illustrating an example of a machine learning process in the information processing server 100 according to the embodiment of the invention.

The information processing server 100 acquires cultivation information and disease and insect damage occurrence information (Step S601). Specifically, the machine learning unit 131 acquires cultivation information and disease and insect damage occurrence information stored in the storage unit 120.

The information processing server 100 acquires an existing disease and insect damage occurrence determination model (Step S602). Specifically, the machine learning unit 131 acquires a disease and insect damage occurrence determination model stored in the storage unit 120.

Then, the information processing server 100 updates the disease and insect damage occurrence determination model using the cultivation information and the disease and insect damage occurrence information (Step S603). Specifically, the machine learning unit 131 selects one of a plurality of machine learning models, and performs machine learning of the disease and insect damage occurrence determination model using the selected machine learning model, the disease and insect damage occurrence information, and the cultivation information corresponding to the disease and insect damage occurrence information.

Then, the information processing server 100 calculates accuracy of the updated disease and insect damage occurrence determination model (Step S604). Specifically, the machine learning unit 131 calculates accuracy of the model by inputting test input data to the new disease and insect damage occurrence determination model acquired by machine learning and comparing the output value with test output data. Incidentally, the machine learning model may be one of models which can be used for machine learning of a disease and insect damage occurrence determination model out of existing machine learning models. For example, the machine learning model may be a computing model using a sorting method such as logistic regression, a support vector machine, random forest, or a neighborhood method and a neural network or a Bayesian network such as deep learning.

When the calculated value is equal to or greater than a threshold value (Step S605/Y), the information processing server 100 stores the updated disease and insect damage occurrence determination model (Step S606). Specifically, when the calculated accuracy is equal to or greater than the threshold value, the machine learning unit 131 stores the new disease and insect damage occurrence determination model in the storage unit 120. Incidentally, when the calculated value is less than the threshold value (Step S605/N), the process flow returns to Step S603.

### (Disease and Insect Damage Occurrence Determining Process)

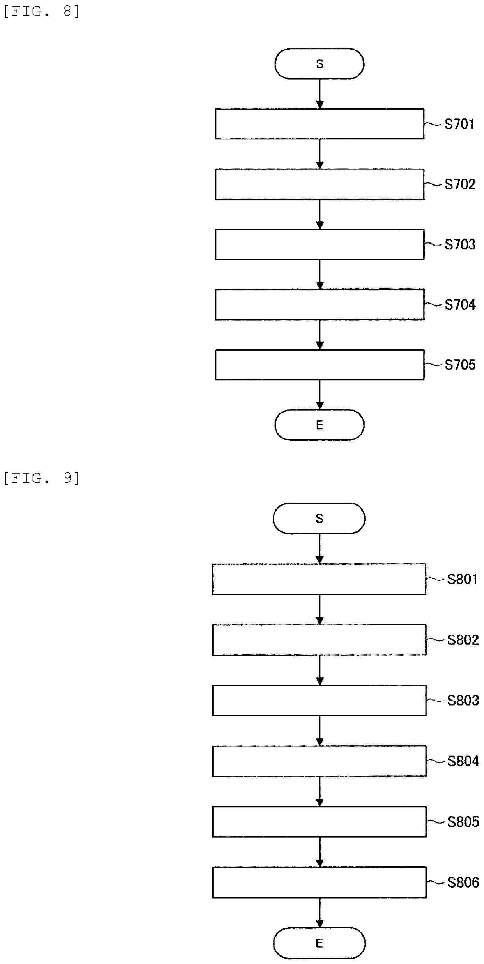

A flow of a disease and insect damage occurrence determining process in the information processing server 100 will be described below in detail with reference to Fig. 8. Fig. 8 is a flowchart conceptually illustrating an example of a disease and insect damage occurrence determining process in the information processing server 100 according to the embodiment of the invention.

The information processing server 100 sets parameters for disease and insect damage occurrence determination (Step S701) . Specifically, the disease and insect damage occurrence determining unit 132 sets a cultivation area, a crop name, a disease and insect damage name, and a prediction period. Incidentally, the set parameters may include a parameter other than the above-mentioned parameters, or a parameter may be added thereto or deleted therefrom.

Then, the information processing server 100 acquires cultivation information in a period which is identified from the parameters (Step S702). Specifically, the disease and insect damage occurrence determining unit 132 acquires cultivation information corresponding to the set cultivation area, the set crop name, and the set disease and insect damage name in the set prediction period.

The information processing server 100 acquires a disease and insect damage occurrence determination model (Step S703) . Specifically, the disease and insect damage occurrence determining unit 132 acquires a disease and insect damage occurrence determination model stored in the storage unit 120.

Then, the information processing server 100 generates disease and insect damage occurrence prediction information using the disease and insect damage occurrence determination model (Step S704). Specifically, the disease and insect damage occurrence determining unit 132 inputs the acquired cultivation information to the disease and insect damage occurrence determination model and acquires a disease and insect damage occurrence determination result from the disease and insect damage occurrence determination model. The disease and insect damage occurrence determination result is the disease and insect damage occurrence prediction information.

Then, the information processing server 100 stores the generated disease and insect damage occurrence prediction information (Step S705). Specifically, the disease and insect damage occurrence determining unit 132 stores the generated disease and insect damage occurrence determination result in the storage unit 120.

### <2.3. Conclusion of Embodiment of Invention>

In this way, according to the embodiment of the invention, the information processing server 100 performs machine learning of a disease and insect damage occurrence determination model using cultivation information as an input on the basis of disease and insect damage occurrence information and the cultivation information of crops corresponding to the disease and insect damage occurrence information and outputs information on the disease and insect damage occurrence determination model acquired by the machine learning. Accordingly, it is possible to allow the information processing server 100 to autonomously update the disease and insect damage occurrence determination model. Accordingly, a person does not need to be directly involved in improvement of a disease and insect damage occurrence determination model and it is possible to reduce times and expenditures required for improvement of the model. Accordingly, it is possible to curb costs and to improve accuracy in determining whether a disease and insect damage occurs.

The information processing server 100 performs machine learning of the disease and insect damage occurrence determination model for specific cultivation information. Accordingly, it is possible to learn characteristics of the specific cultivation information for occurrence of a disease and insect damage. Accordingly, it is possible to take a measure against a disease and insect damage such as spraying of chemicals depending on the characteristics and to achieve effective suppression of the disease and insect damage.

The specific cultivation information includes information indicating a type of a disease and insect damage or the cultivation area. In general, an occurrence factor of a disease and insect damage differs depending on the type of a disease and insect damage and chemicals for prevention or curing differ depending on the type of a disease and insect damage. On the other hand, according to this configuration, it is possible to ascertain an occurrence risk of a disease and insect damage for each type of disease and insect damage by performing machine learning of the disease and insect damage occurrence determination model depending on the type of a disease and insect damage. Accordingly, it is possible to easily identify a chemical which is suitable for spraying. Information acquired by the sensor node 300 or the like is generally only a part of information on a cultivation area. On the other hand, according to this configuration, it is possible to ascertain an occurrence risk of a disease and insect damage for each cultivation area by performing machine learning of a disease and insect damage occurrence determination model depending on the cultivation area. Accordingly, it is possible to ascertain characteristics of a cultivation area for disease and insect damages which is difficult to ascertain from the acquired cultivation information.

The disease and insect damage occurrence information includes information indicating an occurrence time point of a disease and insect damage, and the information processing server 100 performs machine learning of the disease and insect damage occurrence determination model on the basis of the cultivation information at a time point which is identified from the occurrence time point of the disease and insect damage. Here, the cultivation information at the occurrence time point of the disease and insect damage cannot be said to be necessarily linked to an occurrence factor of the disease and insect damage. Accordingly, by performing machine learning using the cultivation information at other time points, it is possible to more accurately ascertain a time point at which chemicals should be sprayed.

The time point which is identified from the occurrence time point of the disease and insect damage includes a time point which has gone back a predetermined time from the occurrence time point of the disease and insect damage. Accordingly, it is possible to ascertain an occurrence risk of the disease and insect damage at the current time point by using past cultivation information associated with occurrence of the disease and insect damage for the machine learning. As a result, it is possible to prevent occurrence of the disease and insect damage.

The disease and insect damage includes an infectious disease, and the time point which has gone back the predetermined time from the occurrence time point of the disease and insect damage includes a time point which has gone back a latent period of the infectious disease from an occurrence time point of the infectious disease. Accordingly, it is possible to ascertain an infection risk of the infectious disease at the current time point by performing the machine learning using the cultivation information at the infection time point which is estimated. As a result, it is possible to prevent infection of the infectious disease itself and to more satisfactorily prevent occurrence of the infectious disease.

The information on the disease and insect damage occurrence determination model includes first information which is generated using the disease and insect damage occurrence determination model. Accordingly, an output result of the disease and insect damage occurrence determination model or information based on the output result can be presented to a user as the first information. Particularly, when the first information is supplied by communication, it is possible to present the first information regardless of a user's location. The information on the disease and insect damage occurrence determination model may be the disease and insect damage occurrence determination model itself. For example, the information processing server 100 may transmit the disease and insect damage occurrence determination model acquired by machine learning to another device and the device may perform the disease and insect damage occurrence determining process.

The cultivation information which is input to the disease and insect damage occurrence determination model includes predicted cultivation information. The information processing terminal 200 acquires a disease and insect damage occurrence determination result based on the predicted cultivation information and controls the output of the acquired disease and insect damage occurrence determination result. Accordingly, it is possible to calculate an occurrence risk of the disease and insect damage in the future by determining whether the disease and insect damage occurs using the future cultivation information. Accordingly, a user can schedule work such as spraying chemicals in advance depending on the occurrence risk of the disease and insect damage in the future. Particularly, a farmer's work is generally large-scaled and thus it is significant to schedule work in advance.

The information processing server 100 further outputs display information for the first information. Accordingly, a user can visually ascertain the disease and insect damage occurrence determination result. Since an amount of information which can be ascertained with a sense of sight is larger than that with other senses, a user can ascertain a larger amount of information at a time. Incidentally, voice information may be output instead of or in addition to the display information.

The display information includes the first information in a time series. Accordingly, a user can ascertain the trend of increase or decrease of the occurrence risk as well as the occurrence risk of the disease and insect damage. Accordingly, it is possible to more accurately determine whether chemical spraying work is necessary or not.

The display information includes the first information for each type of disease and insect damage. Accordingly, a user can determine work which should be performed for each type of disease and insect damage by only browsing the display screen. As a result, a user may not analyze the disease and insect damage and thus it is possible to reduce a work load on a user.

The display information further includes cultivation information corresponding to the first information which is displayed. Accordingly, it is possible to ascertain the cultivation information without using another device or screen. As a result, it is possible to omit an operating labor or an additional device and thus to improve convenience to a user.

The cultivation information includes at least one of information on a cultivation area of crops, information on crops which are cultivated, disease and insect damage information, and chemical information on a disease and insect damage. Accordingly, by performing machine learning of the disease and insect damage occurrence determination model using information on many crops, it is possible to improve accuracy of the disease and insect damage occurrence determination model. With an increase in an amount of information, an effect of reducing costs such as times or expenditures is improved.

The cultivation information may include information on cultivation conditions in addition to crop information, cultivation area information, disease and insect damage information, chemical information, cultivation area observation information, and weather information. The information on cultivation conditions include, for example, information of a planting date, a flowering start date, a harvesting start date, a harvesting end date, and a planting density or a cultivation method of a nursery plant, a root, or the like. Since the cultivation information includes the information on cultivation conditions, it is possible to enhance accuracy in predicting occurrence of a disease and insect damage.

For example, gray mold which is a principal disease invades from a defoliated tissue to plants, a likelihood of occurrence of the disease from a planting date to a flowering date in which there are little defoliated tissues is low. On the other hand, a likelihood of occurrence of the disease from a harvesting start date to a harvesting end date in which peduncles or lower leaves are defoliated is high. Accordingly, setting of a cultivation stage based on information of a planting date, a flowering start date, and a harvesting start date or a harvesting end date is significant for predicting occurrence of a disease and insect damage. The period from a harvesting start date to a harvesting end date may be divided into a maturation period and a post-harvest period of fruits.

With an increase in planting density, insufficient solar radiation or insufficient ventilation in a community is likely to occur and growth of plants or the surrounding environment is affected. Accordingly, a likelihood of occurrence of a disease varies depending on the planting density. As a result, grouping of planting densities is significant for predicting occurrence of disease and insect damage. For example, the planting densities may be sorted every ±200 roots/10a with respect to a planting density of 2000 to 2200 roots/10a.

Cultivation methods are classified into a soil cultivation method, a hydroponic cultivation method, a hydroponic soil cultivation method, a nutrient film hydroponic cultivation method, a flooded hydroponic cultivation method, and the like, and whether a disease and insect damage occurs and the degree of occurrence thereof vary depending on a difference in medium which is used. For example, in soil cultivation, the occurrence risk of a soil-infectious plant disease or a nematode disease increases. In flooded hydroponic cultivation, the occurrence risk of a culture solution-infectious disease increases. Accordingly, classification of the cultivation methods is significant for predicting occurrence of a disease and insect damage. For example, the cultivation methods may be classified into solid cultivation and hydroponic cultivation, and the hydroponic cultivation may be further classified into a flooded type and a solid medium type.

### <2.4. Modified Examples>

One embodiment of the invention has been described above. Incidentally, the embodiment of the invention is not limited to the above-mentioned example. Modified examples of the embodiment of the invention will be described below.

An information processing system 1 according to a modified example of the embodiment of the invention may advise a user on the basis of a disease and insect damage occurrence determination result. Specifically, the information processing server 100 generates chemical spray information on the basis of the output result of a disease and insect damage occurrence determination model and transmits display information based on the chemical spray information to the information processing terminal 200. For example, when the disease and insect damage occurrence determining process ends, the disease and insect damage occurrence determining unit 132 generates the chemical spray information using the disease and insect damage occurrence determination result. Examples of the chemical spray information include information indicating a type of a recommended chemical which is sprayed, a spraying time of the chemical, and a degree of recommendation of spraying. A process flow in this modified example will be described in detail with reference to Fig. 9. Fig. 9 is a flowchart conceptually illustrating an example of a disease and insect damage occurrence determining process in the information processing server 100 according to a modified example of the embodiment of the invention. Incidentally, description of substantially the same processes as the processes described with reference to Fig. 8 will not be repeated.

The information processing server 100 sets parameters associated with determination of occurrence of a disease and insect damage (StepS801) and acquires cultivation information in a period which is identified from the parameters and a disease and insect damage occurrence determination model (Steps S802 and S803).

Then, the information processing server 100 generates disease and insect damage occurrence prediction information using the disease and insect damage occurrence determination model (Step S804).

Then, the information processing server 100 generates chemical spray information on the basis of the disease and insect damage occurrence prediction information (Step S805) . Specifically, the disease and insect damage occurrence determining unit 132 generates chemical spray information indicating a chemical of which spraying is recommended, a recommended spraying time, or a degree of recommendation of spraying (hereinafter also referred to as a degree of recommendation) on the basis of an occurrence risk of a disease and insect damage in the future as the generated disease and insect damage occurrence prediction information. For example, the disease and insect damage occurrence determining unit 132 generates chemical spray information for a type of a chemical corresponding to a disease and insect damage of which the occurrence risk is higher than a threshold value or generates chemical spray information of which the degree of recommendation becomes higher as the occurrence risk becomes higher.

Then, the information processing server 100 stores the generated disease and insect damage occurrence prediction information and the generated chemical spray information (Step S806) . Specifically, the disease and insect damage occurrence determining unit 132 stores the generated disease and insect damage occurrence determination result and the generated chemical spray information in the storage unit 120 in correlation with each other.

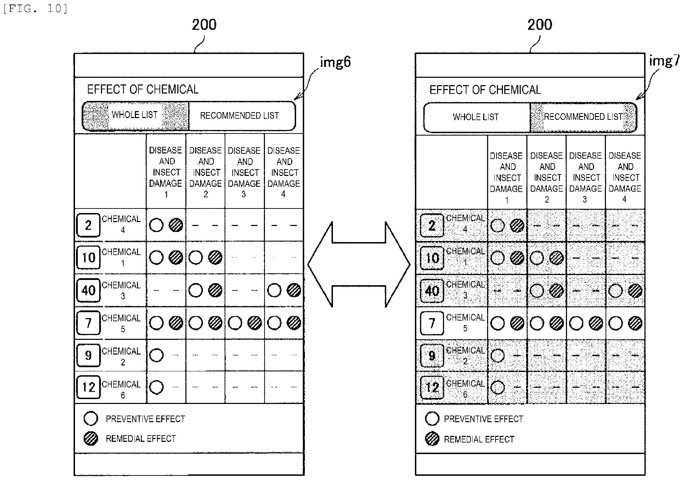

A screen based on the chemical spray information which is displayed by the information processing terminal 200 will be described with reference to Fig. 10. Fig. 10 is a diagram illustrating an example of a chemical effectiveness presentation screen which is displayed by the information processing terminal 200 according to a modified example of the embodiment of the invention.

### (Chemical Effectiveness Presentation Screen)

The display unit 240 displays a chemical effectiveness presentation screen on the basis of image information which is generated by the control unit 220. Examples of the used chemical registration screen include a screen img6 in which effectiveness of all registered chemicals is displayed in the form of a table and a screen img7 in which information on chemicals of which spraying is recommended is emphasized and displayed as illustrated in Fig. 10. In the screen img6, chemicals are arranged in the row direction, disease and insect damages are arranged in the column direction, and effectiveness of the chemicals for the disease and insect damages is graphically displayed. The effectiveness of a chemical includes a preventive effect and a remedial effect. Incidentally, only one of the preventive effect and the remedial effect may be displayed.

When a tab such as a recommended list displayed in the screen img6 is selected, the display screen is switched to the screen img7. In the screen img7, the same table as in the screen img6 is displayed and a row of a chemical of which spraying is recommended is emphasized. For example, in the screen img7, the rows of chemicals other than chemical 5 are displayed thin, and thus the row of chemical 5 is relatively emphasized. As a matter of course, other emphasizing method may be selected. For example, a row of a chemical of which spraying is recommended may be surrounded with a frame or a color of the row of the chemical may be changed to a color different from that of the rows of the other chemicals.

Incidentally, an example in which a chemical of which spraying is recommended is presented to a user has been described above, but a spraying time of the recommended chemical may be presented to the user. For example, a chemical name of which spraying is recommended is displayed on a recommended spraying date instead of or in addition to the graph indicating a time-series change in a degree of residual effect of a sprayed chemical in the disease and insect damage occurrence determination result screen.

The degree of recommendation of spraying may be presented to the user. For example, a degree of emphasis of a chemical of which spraying is recommended in the screen img7 is controlled on the basis of the degree of recommendation. For example, an object indicating the degree of recommendation of spraying a chemical may be additionally displayed in the disease and insect damage occurrence determination result screen, and the degree of recommendation of spraying a chemical may be expressed by a color, luminance, a shape, or a size of the object.

In this way, according to the modified example of the embodiment of the invention, the first information includes chemical spray information which is generated on the basis of the output result of the disease and insect damage occurrence determination model. Accordingly, it is possible to support a user's study of chemical spray based on the occurrence risk. Accordingly, since excess and deficiency of chemical spray is suppressed, it is possible to contribute to reduction in costs for the chemicals and environmental protection. This configuration is particularly significant when a user does not have good knowledge of agriculture.

The chemical spray information includes information indicating a recommended chemical which is sprayed, a spraying time of the chemical, or a degree of recommendation of spraying. Accordingly, by presenting specific information for recommendation of chemical spray to a user, it is possible to curb erroneous or inefficient chemical spray. Accordingly, it is possible to further contribute to reduction in costs for the chemicals and environmental protection.

### <3. Other Embodiments of Invention>

An information processing system 1A according to another embodiment of the invention will be described below. In this embodiment, a predetermined environmental indicator can be calculated from weather information, and a representative value of time-series data of the environmental indicator can be input to the disease and insect damage occurrence determination model. Specifically, a representative value of time-series data of the environmental indicator calculated from the weather information can be used for machine learning of a disease and insect damage occurrence determination model or determination of occurrence of a disease and insect damage using the disease and insect damage occurrence model.

### <3.1. Configuration of System>

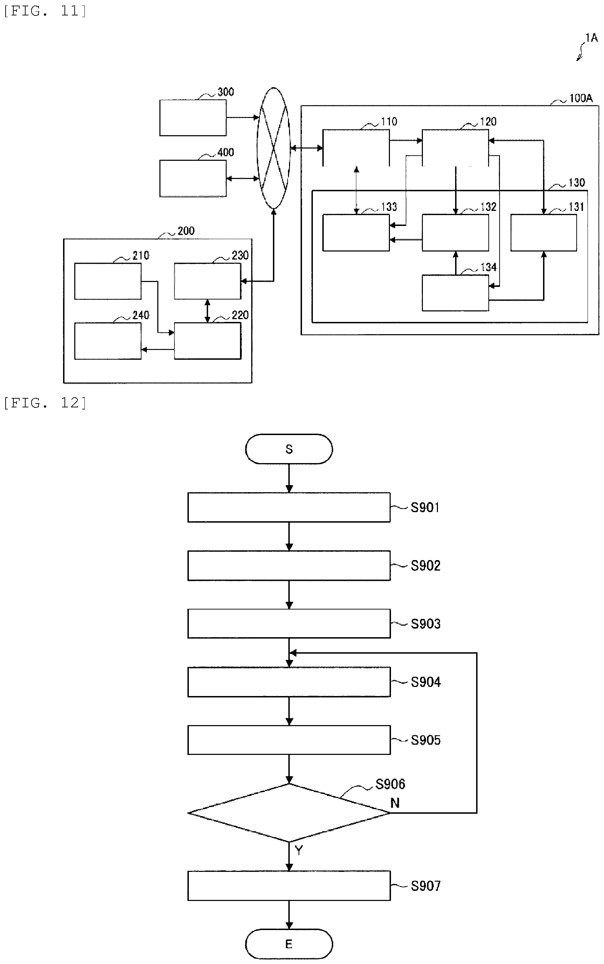

Fig. 11 is a block diagram schematically illustrating an example of a functional configuration of the information processing system 1A according to another embodiment of the invention. The configurations and the functions of the information processing terminal 200, the sensor node 300, and the weather information server 400 illustrated in Fig. 11 are the same as the configurations and the functions of the corresponding elements illustrated in Fig. 2 and thus description thereof will not be repeated.

An information processing server 100A according to this embodiment serves as an information processing device and includes a communication unit 110, a storage unit 120, and a control unit 130A. The functions of the communication unit 110 and the storage unit 120 are the same as in the above-mentioned embodiment and thus description thereof will not be repeated.

As illustrated in Fig. 11, the control unit 130A includes a machine learning unit 131, a disease and insect damage occurrence determining unit 132, a display information transmission and control unit 133, and a pre-processing unit 134. Here, the function of the pre-processing unit 134 will be mainly described.

The pre-processing unit 134 calculates an environmental indicator from cultivation area observation information which is cultivation information or weather information (which may be together referred to as observation information). Specifically, the pre-processing unit 134 calculates an environmental indicator associated with a cultivation environment from the observation information using a computing expression or the like which is widely used in the field of agriculture and the like.

Examples of such an environmental indicator include a saturation deficit, a dew-point temperature, and a difference between the dew-point temperature and the air temperature. Examples of the observation information which is used to calculate such an environmental indicator include information indicating an air temperature, a relative humidity, an amount of solar radiation, an amount of rainfall, and a carbon dioxide or soil moisture content.

The pre-processing unit 134 outputs a representative value of time-series data of the calculated environmental indicator. Specifically, the pre-processing unit 134 acquires a distribution of data associated with the environmental indicator acquired in a time series in a predetermined period and outputs a representative value in the distribution.

An example of the representative value may be a percentile value. For example, the pre-processing unit 134 may arrange time-series data of the environmental indicator calculated from the observation information acquired in a time series in the predetermined period in an ascending order or a descending order and output a predetermined percentile value of the arranged data. Then, for example, when 50 percentile value (a median value) of the time-series data of a saturation deficit in a predetermined period is 3.21, it can be seen that a time in which the saturation deficit in the predetermined period is equal to or less than 3.21 is a half time of the predetermined period. Such an environmental indicator can be used as one of an input value to a disease and insect damage occurrence determination model.

For example, various statistical representative values such as a minimum value, a maximum value, an average value, a maximum frequency, a variance, and a standard deviation may be used as the representative value. The types of the representative value which is used as an input value to a disease and insect damage occurrence determination model can be appropriately set depending on characteristics of parameters or a trend of time-series change.

Setting of the predetermined period in which the time-series data of the environmental indicator is acquired is not particularly limited. The predetermined period may be, for example, several days before and after. This predetermined period can be appropriately set depending on infection behavior or occurrence behavior of disease and insect damages, effective behavior of chemicals, and the like.

The pre-processing unit 134 outputs the representative value of the time-series data of the calculated environmental indicator to the machine learning unit 131. In this case, the machine learning unit 131 can perform machine learning of a disease and insect damage occurrence determination model using the representative value as an input value.

The pre-processing unit 134 outputs the representative value of the time-series data of the calculated environmental indicator to the disease and insect damage occurrence determining unit 132. In this case, the disease and insect damage occurrence determining unit 132 can input the representative value to a disease and insect damage occurrence determination model, output a disease and insect damage occurrence determination result from the disease and insect damage occurrence determination model, and supply the disease and insect damage occurrence determination result to the display information transmission and control unit 133.

### <3.2. Processing of System>

A flow of the machine learning process in the information processing server 100A will be described below in detail.

### (Machine Learning Process)

Fig. 12 is a flowchart conceptually illustrating an example of the machine learning process in the information processing server 100A according to another embodiment of the invention.

The information processing server 100A acquires cultivation information and disease and insect damage occurrence information (Step S901). Specifically, the machine learning unit 131 acquires cultivation information (for example, which includes weather information and cultivation area observation information) and disease and insect damage occurrence information stored in the storage unit 120.

The information processing server 100A calculates an environmental indicator from the observation information and outputs a representative value of the time-series data of the calculated environmental indicator (Step S902). Specifically, the pre-processing unit 134 calculates an environmental indicator from the acquired observation information including the weather information or the cultivation area observation information and outputs the representative value of the time-series data of the calculated environmental indicator to the machine learning unit 131.

Then, the information processing server 100A acquires an existing disease and insect damage occurrence determination model (Step S903). Specifically, the machine learning unit 131 acquires a disease and insect damage occurrence determination model stored in the storage unit 120.

Then, the information processing server 100A updates the disease and insect damage occurrence determination model using the cultivation information and the disease and insect damage occurrence information (Step S904). Specifically, the machine learning unit 131 selects one of a plurality of machine learning models and performs machine learning of the disease and insect damage occurrence determination model using the selected machine learning model, the disease and insect damage occurrence information, and the cultivation information corresponding to the disease and insect damage occurrence information. Incidentally, the machine learning unit 131 according to this embodiment uses a representative value of time-series data of the environmental indicator calculated from the observation information as an input value in the machine learning.

Then, the information processing server 100A calculates accuracy of the updated disease and insect damage occurrence determination model (Step S905). Specifically, the machine learning unit 131 calculates accuracy of the model by inputting test input data to the new disease and insect damage occurrence determination model acquired by the machine learning and comparing an output value thereof with test output data. Incidentally, the machine learning model may be one of models which can be used for the machine learning of the disease and insect damage occurrence determination model out of the existing machine learning models. For example, the machine learning model may be a computing model using a sorting method such as logistic regression, a support vector machine, random forest, or a neighborhood method and a neural network or a Bayesian network such as deep learning.

When the calculated value is equal to or greater than a threshold value (Step S906/Y), the information processing server 100A stores the updated disease and insect damage occurrence determination model (Step S907). Specifically, when the calculated accuracy is equal to or greater than the threshold value, the machine learning unit 131 stores the new disease and insect damage occurrence determination model in the storage unit 120. Incidentally, when the calculated value is less than the threshold value (Step S906/N), the process flow returns to Step S904.

### (Disease and Insect Damage Occurrence Determining Process)

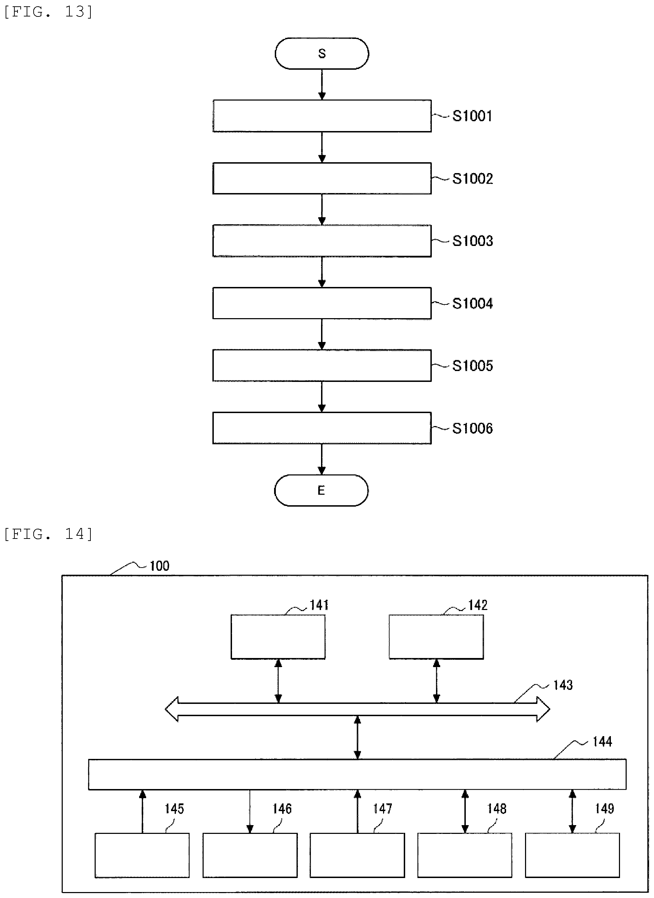

A flow of a disease and insect damage occurrence determining process in the information processing server 100A will be described below in detail with reference to Fig. 13. Fig. 13 is a flowchart conceptually illustrating an example of a disease and insect damage occurrence determining process in the information processing server 100A according to another embodiment of the invention.

The information processing server 100A sets parameters for disease and insect damage occurrence determination (Step S1001). Specifically, the disease and insect damage occurrence determining unit 132 sets a cultivation area, a crop name, a disease and insect damage name, and a prediction period. Incidentally, the set parameters may include a parameter other than the above-mentioned parameters, or a parameter may be added thereto or deleted therefrom.

Then, the information processing server 100A acquires cultivation information in a period which is identified from the parameters (Step S1002). Specifically, the disease and insect damage occurrence determining unit 132 acquires cultivation information (for example, which includes weather information or cultivation area observation information) corresponding to the cultivation area, the crop name, and the disease and insect damage name set in the set prediction period.

The information processing server 100A calculates an environmental indicator from the observation information and outputs a representative value of the time-series data of the calculated environmental indicator (Step S1003) . Specifically, the pre-processing unit 134 calculates an environmental indicator form the acquired observation information including the weather information or the cultivation area observation information, and outputs the representative value of the time-series data of the calculated environmental indicator to the disease and insect damage occurrence determining unit 132.

Then, the information processing server 100A acquires a disease and insect damage occurrence determination model (Step S1004). Specifically, the disease and insect damage occurrence determining unit 132 acquires a disease and insect damage occurrence determination model stored in the storage unit 120.

Then, the information processing server 100A generates disease and insect damage occurrence prediction information using the disease and insect damage occurrence determination model (Step S1005). Specifically, the disease and insect damage occurrence determining unit 132 inputs the acquired cultivation information to the disease and insect damage occurrence determination model and acquires a disease and insect damage occurrence determination result from the disease and insect damage occurrence determination model. The disease and insect damage occurrence determination result is the disease and insect damage occurrence prediction information. Incidentally, the disease and insect damage occurrence determining unit 132 according to this embodiment uses the representative value of the time-series data of the environmental indicator calculated from the observation information as an input value to generate the disease and insect damage occurrence prediction information.

Then, the information processing server 100A stores the generated disease and insect damage occurrence prediction information (Step S1006) . Specifically, the disease and insect damage occurrence determining unit 132 stores the generated disease and insect damage occurrence determination result in the storage unit 120.

### <3.3. Conclusion>

In this way, according to another embodiment of the invention, the information processing server 100A calculates an environmental indicator from weather information or cultivation area observation information and uses a representative value of time-series data of the environmental indicator to perform machine learning and to generate a disease and insect damage occurrence determination result. That is, the information processing server 100 uses the representative value of the time-series data of the environmental indicator as an input value to a disease and insect damage occurrence determination model. The environmental indicator is an important indicator for ascertaining a cultivation environment of crops. Accordingly, various parameters in which the cultivation environment is reflected are used to construct a disease and insect damage occurrence determination model. Accordingly, since accuracy of the disease and insect damage occurrence determination model is improved, it is possible to improve accuracy in determining whether a disease and insect damage occurs.

Since a threshold value or the like is not artificially set by using a representative value of time-series data of an environmental indicator, a person may not be directly involved in improvement of a disease and insect damage occurrence determination model. Accordingly, it is possible to reduce times and expenditures required for improvement of a model and to perform more accurate analysis and prediction.

Incidentally, in this embodiment, an example in which the information processing server 100A uses a representative value of time-series data of an environmental indicator in addition to the observation information as an input value to a disease and insect damage occurrence determination model has been described, but the invention is not limited to the example. For example, the information processing server 100A may use a representative value of time-series data of an environmental indicator instead of the observation information as an input value to a disease and insect damage occurrence determination model. In this case, parameters in which a cultivation environment of crops is reflected are used as an input value to a disease and insect damage occurrence determination model. Accordingly, since accuracy of the disease and insect damage occurrence determination model is improved, it is possible to improve accuracy in determining whether a disease and insect damage occurs. For example, the information processing server 100A may use the very value of an environmental indicator as an input value to a disease and insect damage occurrence determination model. In this case, parameters in which a cultivation environment of crops is reflected are also used as an input value to a disease and insect damage occurrence determination model.

For example, the information processing server 100A may use a representative value of time-series data of observation information as an input value to a disease and insect damage occurrence determination model. Specifically, the machine learning unit 131 may acquire time-series data of the observation information (for example, an air temperature, a relative humidity, and the like) and use a representative value (for example, a percentile value or the like) of the time-series data to perform machine learning of a disease and insect damage occurrence determination model. In this case, a time-series change pattern of observation information or the like can also be used as an input value to a disease and insect damage occurrence determination model. Accordingly, it is possible to perform more accurate analysis and prediction.

<3.4. Modified Examples>

Another embodiment of the invention has been described hitherto. Incidentally, another embodiment of the invention is not limited to the above-mentioned example. A modified example of another embodiment of the invention will be described below.

As natural conditions, conditions relatively suitable and conditions unsuitable for a target disease and insect damage are mixed in a day. Accordingly, for example, use of an average value of the acquired observation information in a day departs from actual conditions of living things. For example, a living thing of which a suitable growth temperature ranges from 15°C to 25°C does not grow in an environment with a daytime temperature of 40°C and a night temperature of 0°C, but grows in an environment with an average temperature of 20°C in a day.

In a computing expression which is conventionally widely used in the fields of agriculture or the like, many parameters need to be adjusted to approach an experiment result and thus advanced mathematics is required. There are a plurality of experiment results for one disease and insect damage. Like ensemble learning which is performed in machine learning, it may be conceivable that risk scores calculated using a plurality of different methods are weighted and used. In this case, it is significant when a disease and insect damage occurrence determination model can be simply constructed and risk scores can be calculated.

On the other hand, in a modified example of another embodiment of the invention, the information processing system 1 may use a risk score of occurrence of a disease and insect damage which is more realistic along with a representative value of the time-series data of the environmental indicator to determine whether a disease and insect damage occurs using a disease and insect damage occurrence determination model. Specifically, the pre-processing unit 134 may calculate a risk score of occurrence of a disease and insect damage which is realistic on the basis of observation information which is acquired at short intervals along with the representative value of the time-series data of the environmental indicator which is exemplified as the percentile value.

The schematic functional configuration of the information processing system according to the modified example of another embodiment of the invention is basically the same as the functional configuration of the information processing system 1A according to another embodiment illustrated in Fig. 11, except the functions of the pre-processing unit 134 and the disease and insect damage occurrence determining unit 132. Here, the function of the pre-processing unit 134 which is one functional configuration of the control unit 130A of the information processing server 100A will be mainly described. An example in which a risk score is calculated in consideration of a suitable growth temperature of a disease and insect damage will be described below.

As a first example of a risk score calculating method, the pre-processing unit 134 may calculate a risk score using a risk score calculation model which is constructed in advance. The risk score calculation model may be constructed, for example, by approximating a combination of a temperature and a risk score which is acquired by experiment using a smoothing function. As the smoothing function, for example, smoothing based on application of a polynomial, a kernel function, a spline function, a moving linear smoothing, a Friedman's super-smoother method, smoothing based on a moving median value, and an additive model may be used. The pre-processing unit 134 calculates a risk score at predetermined intervals such as 10 minutes or 1 hour on the basis of information of the temperature acquired at the predetermined intervals using such a risk score calculation model.

As a second example of the risk score calculating method, the pre-processing unit 134 may calculate a risk score which is binarized depending on whether the acquired temperature is suitable for growth or the like. For example, at predetermined intervals, the pre-processing unit 134 calculates a risk score of 1 when the temperature acquired at the predetermined intervals is a suitable growth temperature or a viable temperature and calculates a risk score of 0 when the acquired temperature is an unsuitable growth temperature or an unviable temperature.

The pre-processing unit 134 calculates an environmental indicator and a risk score at each observation time using observation information acquired at predetermined intervals such as 10 minutes or 1 hour. The pre-processing unit 134 may extract risk scores at a time at which predetermined conditions such as a wet state of a leaf surface estimated from the environmental indicator are satisfied out of the calculated risk scores and calculate an average value or an integrated value of the risk scores every predetermined period. In addition, the pre-processing unit 134 may classify the average value or the integrated value of the calculated risk scores into low, middle, and high occurrence risks of a disease and insect damage . The average value or the integrated value which is calculated in this way can be used as an input value to a disease and insect damage occurrence determination model.

The time intervals at which the risk scores are calculated are not particularly limited. For example, the risk scores may be calculated at time intervals at which a temperature change is not greater than a predetermined temperature . Setting of the predetermined period in which the average value or the integrated value of the risk scores is calculated is not particularly limited. For example, a day or a half day can be appropriately set.

The pre-processing unit 134 outputs the calculated risk scores and the average value or the integrated value of the risk scores to the disease and insect damage occurrence determining unit 132 along with the representative value of the time-series data of the environmental indicator. In this case, the disease and insect damage occurrence determining unit 132 can input the representative value and values of the risk scores to a disease and insect damage occurrence determination model, output a disease and insect damage occurrence determination result from the disease and insect damage occurrence determination model, and supply the disease and insect damage occurrence determination result to the display information transmission and control unit 133.

A flow of the disease and insect damage occurrence determining process in the information processing server 100A will be described below in detail. The flow of the disease and insect damage occurrence determining process in the information processing server 100A according to the modified example of another embodiment of the invention is basically the same as the flowchart of the disease and insect damage occurrence determining process according to another embodiment of the invention illustrated in Fig. 13. The disease and insect damage occurrence determining process according to the modified example of another embodiment of the invention is different from the disease and insect damage occurrence determining process according to another embodiment of the invention in that a value of a risk score along with the representative value of the time-series data of the environmental indicator is used.

Specifically, in Step S1003, the information processing server 100A calculates an environmental indicator from observation information and calculates a representative value of the time-series data of the calculated environmental indicator. The information processing server 100A calculates a risk score at intervals of a predetermined time from the observation information and the environmental indicator and calculates an average value or an integrated value of the risk scores for each predetermined period. The information processing server 100A outputs the calculated risk scores and the average value or the integrated value of the risk scores along with the representative value of the time-series data of the calculated environmental indicator.

In Step S1005, the information processing server 100A uses the risk scores and the average value or the integrated value of the risk scores along with the representative value of the time-series data of the environmental indicator calculated from the observation information as an input value when disease and insect damage occurrence prediction information is generated.

In this way, according to the modified example of another embodiment of the invention, the input value when the disease and insect damage occurrence prediction information is generated includes information of the risk scores of occurrence of a disease and insect damage which is more realistic. Accordingly, it is possible to prevent the generated disease and insect damage occurrence prediction information from departing greatly from actual natural conditions. According to the modified example of another embodiment of the invention, it is possible to calculate the dense risk scores using a relatively simple method.

Incidentally, disease and insect damage occurrence prediction using the risk scores can be applied to prediction of growth of plants or insects. For example, by calculating growth scores corresponding to the risk scores or an average value or an integrated value of the growth scores using suitable growth temperatures of plants or insects instead of the suitable growth temperature of a disease and insect damage, it is possible to perform prediction of growth of plants, prediction of an amount of crops, and prediction of growth or occurrence of insects.

### <4. Hardware Configuration of Information Processing Server according to Embodiment of Invention>

Embodiments of the invention have been described above. The processing of the information processing server 100 is embodied in cooperation of software with hardware of the information processing server 100 which will be described below.

Fig. 14 is an explanatory diagram illustrating a hardware configuration of the information processing server 100 according to an embodiment of the invention. As illustrated in Fig. 14, the information processing server 100 includes a processor 141, a memory 142, an internal bus 143, an interface 144, an input device 145, an output device 146, a storage device 147, a connection port 148, and a communication module 149.

### (Processor)

The processor 141 serves as an arithmetic processing device and a control device and implements the function of the control unit 130 (the machine learning unit 131, the disease and insect damage occurrence determining unit 132, and the display information transmission and control unit 133) in cooperation with various programs. The processor 141 activates various logical functions of the information processing server 100 by executing a program stored in the memory 142 or another storage medium such as the storage device 147 using a control circuit. For example, the processor 141 may be a central processing unit (CPU) or a graphics processing unit (GPU). Incidentally, the processor 141 may be a microprocessor.

### (Memory)

The memory 142 stores programs or computing parameters which are used by the processor 141 and implements the function of the storage unit 120. For example, the memory 142 includes a random access memory (RAM) and a read only memory (ROM) and temporarily stores programs which are used in execution of the processor 141 or parameters varying properly in execution thereof. Incidentally, an external storage device may be used as a part of the memory 142 via the connection port 148, the communication module 149, or the like.

Incidentally, the processor 141 and the memory 142 are connected to each other via the internal bus 143 including a CPU bus. The interface 144 connects the internal bus 143 to the input device 145, the output device 146, the storage device 147, the connection port 148, and the communication module 149.

### (Input Device)

The input device 145 includes input means for inputting information and an input control circuit that generates an input signal on the basis of an input and outputs the input signal to the processor 141, and implements the function of the operation unit. Examples of the input means include buttons, switches, a lever, and a microphone. By operating the input device 145, various pieces of data are input to the information processing server 100 or processing operations are instructed thereto.

### (Output Device)

The output device 146 outputs sound, light, or the like on the basis of an output signal and implements the function of the output unit. Examples of the output device 146 include a sound output device such as a speaker and a headphone, a lamp using a light emitting diode (LED) or the like, and a display device such as a liquid crystal display (LCD) device, an organic light emitting diode (OLED) device, and a projector device.

### (Storage Device)

The storage device 147 is a device that stores data. The storage device 147 may include a storage medium, a recording device that records data on the storage medium, a reading device that reads data from the storage medium, and a deleting device that deletes data recorded on the storage medium. The storage device 147 stores programs which are executed by the processor 141 or various pieces of data.

### (Connection Port)

The connection port 148 is a port that directly connects a device to the information processing server 100. For example, the connection port 148 may be a universal serial bus (USB) port, an IEEE1394 port, an RS-232C port, or a high-definition multimedia interface (HDMI: registered trademark) port. By connecting an external device to the connection port 148, data may be exchanged between the information processing server 100 and the external device.

### (Communication Module)

The communication module 149 is a communication device for connection to a network and implements the function of the communication unit 110. For example, the communication module 149 may be a wireless local area network (LAN)-adaptable communication device or a 3G or LTE-adaptable communication device. The communication module 149 may be a wired communication-adaptable device that performs communication in a wired manner.

### <4. Conclusion>

According to the embodiments of the invention, the information processing server 100 can autonomously update a disease and insect damage occurrence determination model. Accordingly, a person may not be directly involved in improvement of the disease and insect damage occurrence determination model and thus it is possible to reduce times and expenditures required for improvement of a model. Accordingly, it is possible to reduce costs and to improve accuracy in determining whether a disease and insect damage occurs.

While suitable embodiments of the invention have been described above with reference to the accompanying drawings, the invention is not limited to the embodiments . Those skilled in the technical field to which the invention belongs can apparently think of various changes or modifications within the range of the technical concept described in the claims, and they are understood to belong to the technical scope of the invention.

For example, in the embodiments, a disease and insect damage occurrence determination result or display information which is generated from the disease and insect damage occurrence determination result is transmitted from the information processing server 100, but the invention is not limited to the embodiments. For example, the information processing server 100 may transmit a disease and insect damage occurrence determination model acquired by machine learning to an external device. In this case, a disease and insect damage occurrence determining process is performed by the external device and information such as a disease and insect damage occurrence determination result is transmitted to the information processing terminal 200.

Information which has been described to be generated by the operation input unit 210 in the embodiments may be automatically generated without depending on a user's operation. For example, disease and insect damage occurrence information may be generated using information which is acquired from a sensor such as an imaging sensor and a moisture content sensor.

A variety of information described in the embodiments may be one of quantitative information and qualitative information.

In the embodiments, an example in which the disease and insect damage occurrence determining process is performed before an information supply request is transmitted from the information processing terminal 200 has been described, but the disease and insect damage occurrence determining process may be performed in response to the information supply request.

In the embodiments, an example in which a disease and insect damage occurrence determination result is presented to a user has been described, but notification of a user based on the disease and insect damage occurrence determination result may be performed. For example, the information processing server 100 transmits alert information indicating that there is concern of infection depending on the calculated infection risk of an infectious disease to the information processing terminal 200. When the alert information is received, the information processing terminal 200 notifies a user of reception of the alert information using sound, vibration, or the like and displays an image indicating that there is concern of infection.

The steps illustrated in the flowcharts according to the embodiments include processes which are performed in a time series in the illustrated order and processes which are not performed in a time series but are performed in parallel or individually. The steps which are performed in a time series can be appropriately changed in the order in some cases.

A computer program that causes the hardware built in the information processing server 100 to implement the same functions as the functional configurations of the information processing server 100 can also be prepared. A storage medium in which the computer program is stored is also provided.

### Reference Signs List

100, 100A Information processing server
110 Communication unit
120 Storage unit
130 Control unit
131 Machine learning unit
132 Disease and insect damage occurrence determining unit
133 Display information transmission and control unit
134 Pre-processing unit
200 Information processing terminal
210 Operation input unit
220 Control unit
230 Communication unit
240 Display unit
300 Sensor node
400 Weather information server

## Claims

1. An information processing device comprising:
a machine learning unit configured to perform machine learning of a disease and insect damage occurrence determination model using cultivation information as an input on the basis of disease and insect damage occurrence information and the cultivation information of crops corresponding to the disease and insect damage occurrence information; and
an output unit configured to output information on the disease and insect damage occurrence determination model acquired by the machine learning.

2. The information processing device according to claim 1, wherein the machine learning unit performs machine learning of the disease and insect damage occurrence determination model for specific cultivation information.

3. The information processing device according to claim 2, wherein the specific cultivation information includes information indicating a type of a disease and insect damage, a cultivation area, or cultivation conditions.

4. The information processing device according to any one of claims 1 to 3, wherein the disease and insect damage occurrence information includes information indicating an occurrence time point of a disease and insect damage, and
wherein the machine learning unit performs machine learning of the disease and insect damage occurrence determination model on the basis of the cultivation information at a time point which is identified from the occurrence time point of the disease and insect damage.

5. The information processing device according to claim 4, wherein the time point which is identified from the occurrence time point of the disease and insect damage includes a time point which has gone back a predetermined time from the occurrence point of the disease and insect damage.

6. The information processing device according to claim 5, wherein the disease and insect damage includes an infectious disease, and
wherein the time point which has gone back a predetermined time from the occurrence time point of the disease and insect damage includes a time point which has gone back a latent period of the infectious disease from an occurrence time point of the infectious disease.

7. The information processing device according to any one of claims 1 to 6, wherein information on the disease and insect damage occurrence determination model includes first information which is generated using the disease and insect damage occurrence determination model.

8. The information processing device according to claim 7, wherein the cultivation information which is input to the disease and insect damage occurrence determination model includes the cultivation information which is predicted.

9. The information processing device according to claim 7 or 8, wherein the first information includes chemical spray information which is generated on the basis of an output result of the disease and insect damage occurrence determination model.

10. The information processing device according to claim 9, wherein the chemical spray information includes information indicating a chemical of which spraying is recommended, a spray time of the recommended chemical, or a degree of recommendation of spraying thereof.

11. The information processing device according to claim 7, wherein the output unit additionally outputs display information for the first information.

12. The information processing device according to claim 11, wherein the display information includes the first information in a time series.

13. The information processing device according to claim 11 or 12, wherein the display information includes the first information for each type of disease and insect damage.

14. The information processing device according to any one of claims 11 to 13, wherein the display information further includes the cultivation information corresponding to the first information which is displayed.

15. The information processing device according to any one of claims 1 to 14, wherein the cultivation information includes at least one of information on a cultivation area of crops, information on crops which are cultivated, disease and insect damage information, and chemical information on a disease and insect damage.

16. The information processing device according to any one of claims 1 to 15, wherein the cultivation information includes at least one of a planting date, a flowering start date, a harvesting start date, a harvesting end date, a planting density, and a cultivation method.

17. The information processing device according to any one of claims 1 to 16, wherein the cultivation information includes at least one of cultivation area observation information and weather information.

18. The information processing device according to claim 17, wherein the information which is input to the disease and insect damage occurrence determination model further includes a representative value of time-series data of an environmental indicator which is calculated from at least one of the cultivation area observation information and the weather information.

19. The information processing device according to claim 17 or 18, wherein the information which is input to the disease and insect damage occurrence determination model further includes a representative value of time-series data of the cultivation area observation information or the weather information.

20. The information processing device according to claim 18 or 19, wherein the representative value includes a predetermined percentile value of the time-series data.

21. The information processing device according to any one of claims 1 to 20, wherein the information which is input to the disease and insect damage occurrence determination model includes a value of a risk score of occurrence of a disease and insect damage at individual times which is calculated from the cultivation information.

22. An information processing system comprising:
an information acquiring unit configured to acquire disease and insect damage occurrence information and cultivation information of crops;
a machine learning unit configured to perform machine learning of a disease and insect damage occurrence determination model using cultivation information as an input on the basis of the disease and insect damage occurrence information and the cultivation information corresponding to the disease and insect damage occurrence information; and
an output unit configured to output information on the disease and insect damage occurrence determination model acquired by the machine learning.
